# EUROPEAN PATENT SPECIFICATION

(11) **EP 1 900 953 B1**
(45) Date of publication and mention of the grant of the patent: **04.11.2009**
(21) Application number: 06254734.4
(22) Date of filing: 12.09.2006
(51) Int. Cl.: F16D 21/04, F16D 23/02, F16D 11/10, F16D 11/14

(54) **Clutch with spring biased forward and backward movement**
Kupplung mit vorgespannter Feder für die Vor-und Rückwärtsbewegung
Accouplement à ressort précontraint pour le mouvement avant et arrière

(43) Date of publication of application: 19.03.2008
(73) Proprietor: Liu, Jen-Chih, Kaohsiung City (TW)
(72) Inventor: Liu, Jen-Chih, Kaohsiung City (TW)
(74) Representative: Brown, Kenneth Richard

(56) References cited:
- FR-A- 694 860
- GB-A- 2 286 435
- US-A- 3 442 361

## Description

### Field of the Invention:

The present invention relates to clutches for shaft transmission, more particularly to a clutch capable of cushioning forward movement and guarding backward movement.

### Background of the Invention:

Clutches for shaft transmission in two wheel drive and four wheel drive automobiles of the prior art, such as the one disclosed by U. S. patent number 5,997,428, utilize a driving stick to control the separation of two rotational shafts, whereby the mechanical power can be transported from one shaft to another.

However, the problem of instantaneous misalignment between the sleeve driven by the driving stick and the gears on a second shaft is solved by an external cushioning mechanism in the prior art, which takes extra space and increases manufacturing cost.

FR 694 860 A discloses a gear change mechanism in which coupling between a drive gear rotating with a drive shaft and a driven shaft for a fourth out of four selectable gears is effected by a gear shift collar acting via a compression spring to urge a driven gear axially moveable along the driven shaft into engagement with the drive gear. Shifting into the third gear involves opposite shifting of the gear shift collar to act via another compression spring so as to urge another axially movable driven gear into engagement with a rotating pinion.

### Summary of the Invention:

The primary objective of the present invention is to provide a clutch capable of cushioning forward movement and guarding backward movement having the advantages of:
1. simple structure;
2. small size;
3. having a cushioning mechanism that prevents damages to transmission components when gear wheels cannot be engaged or separated; and
4. therefore having more durable parts.

The various objects and advantages of the present invention will be more readily understood from the following detailed description when read in conjunction with the appended drawings.

To achieve above object, the present invention provides a clutch capable of cushioning forward movement and guarding backward movement, comprising: a first mandrel further comprising an engagement gear surface on one end thereof; a second mandrel; a clutch sleeve mounted on an end section of said second mandrel close to said first mandrel for engaging said engagement gear surface on said first mandrel; a driving stick driving said clutch sleeve to move longitudinally; a clutch ring slidably mounted on said clutch sleeve, having a cushioning mechanism with said clutch sleeve; and a cushioning spring disposed in said cushioning mechanism; characterised in that said cushioning spring is arranged to facilitate the engagement between said clutch ring and said engagement gear surface on said first mandrel due to a driving stick shift when said clutch ring and said engagement surface are not precisely aligned; a safety spring is disposed in said cushioning mechanism for facilitating the disengagement between said clutch ring and said engagement gear surface on said first mandrel due to a driving stick shift requiring such disengagement; said clutch sleeve is further provided with a ring groove for securing said driving stick and a retaining hole for said cushioning springs and a retaining hole for said safety spring; each of said retaining holes comprising a through hole for positioning axles for said cushioning spring and said safety spring; a plurality of engagement strips being formed on an inner wall of said clutch sleeve for engaging a plurality of engagement slots on said second mandrel; and said clutch sleeve further having a plurality of engagement slots on an outer wall thereof for engaging said clutch ring.

### Brief Description of the Drawings:

Fig. 1 is a lateral cross-sectional view of a clutch according to an embodiment of the present invention.
Fig. 2 is a lateral cross-sectional view of the clutch in Fig. 1 wherein the gear portions are not aligned.
Fig. 3 is a lateral cross-sectional view of the clutch in Fig. 1 wherein the gear portions are engaged.
Fig. 4 is a lateral cross-sectional view of the clutch in Fig. 1 wherein the gear portions are about to separate.
Fig. 5 shows the clutch sleeve of the described embodiment.
Fig. 6 is a right side view of the clutch sleeve in Fig. 5.
Fig. 7 is a left side view of the clutch sleeve in Fig. 5.
Fig. 8 is the 8-8 lateral cross-section of the clutch sleeve in Fig. 6.
Fig. 9 shows the clutch ring of the described embodiment.
Fig. 10 is a right side view of the clutch ring in Fig. 9.
Fig. 11 is a left side view of the clutch ring in Fig. 9.
Fig. 12 is the 12-12 lateral cross-section of the clutch ring in Fig. 10.
Fig. 13 illustrates the spring for cushioning forward gear engagement disposed between the clutch sleeve and the clutch ring.
Fig. 14 illustrates the spring for securing backward restoring movement disposed between the clutch sleeve and the clutch ring.

### Detailed Description of the Preferred Embodiments:

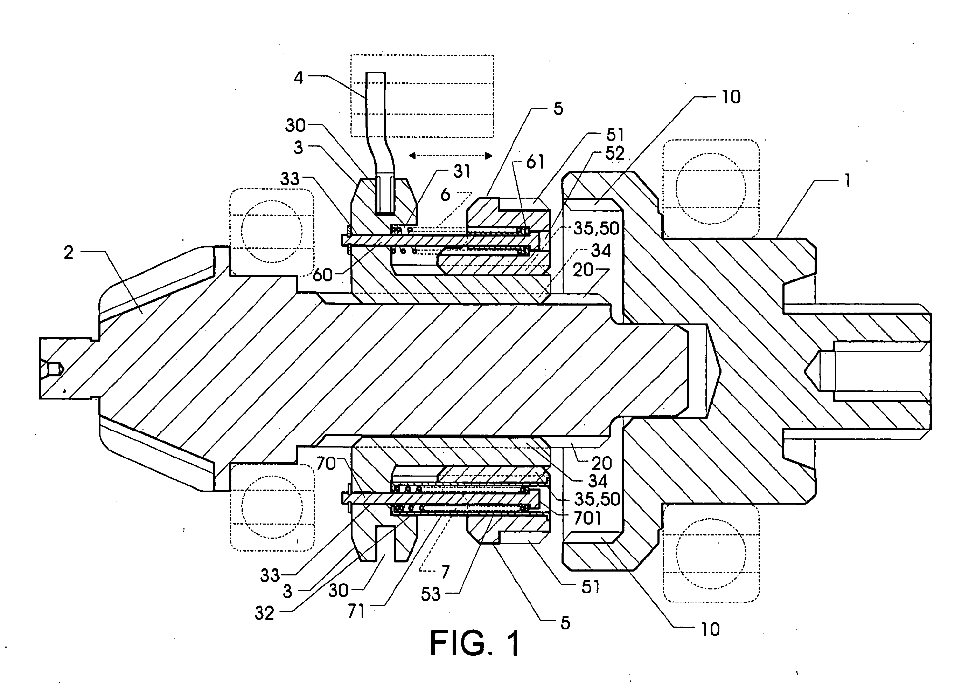

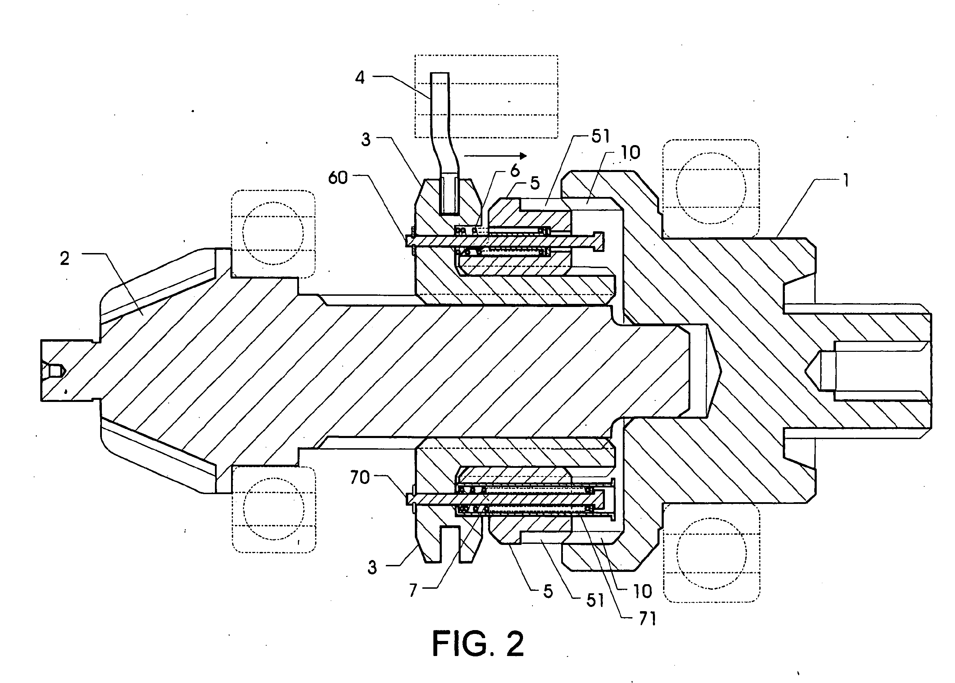

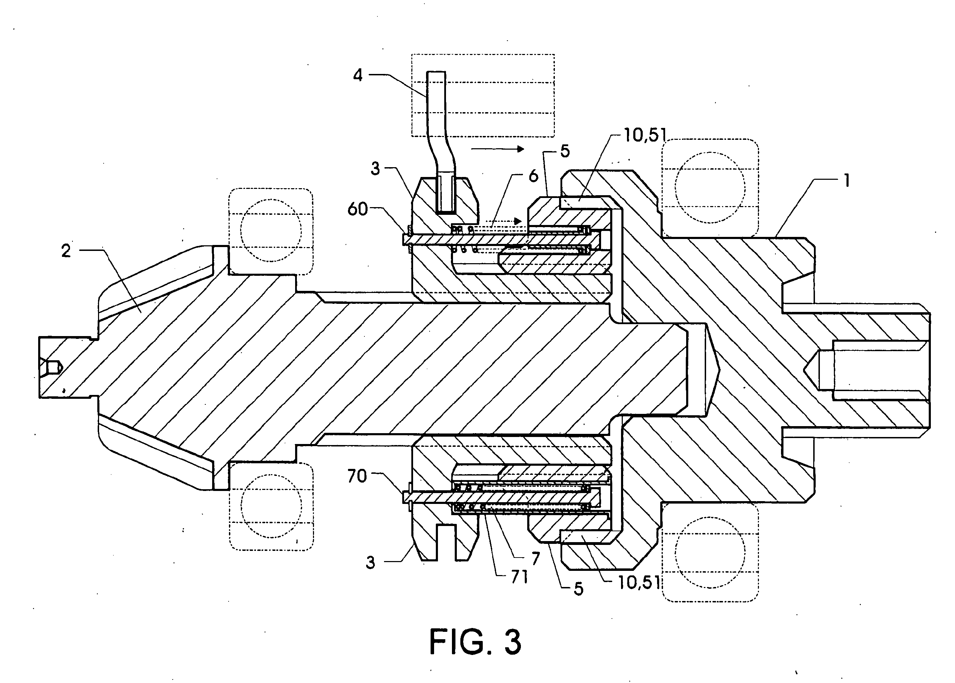

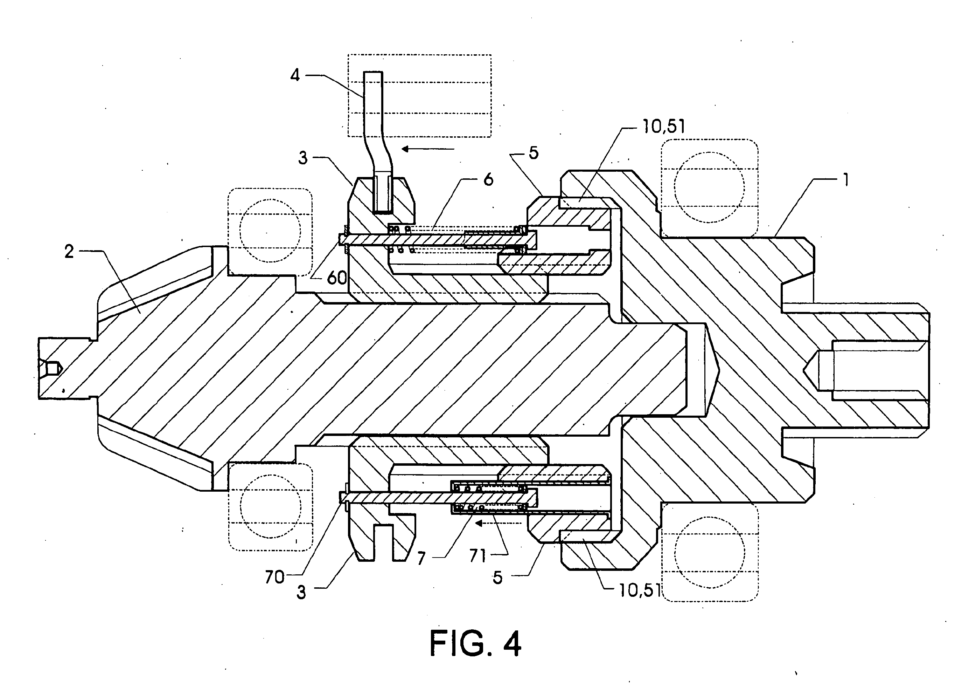

Referring to Figs 1 to 4, a preferred embodiment of the present invention as a clutch capable of cushioning forward movement and guarding backward movement comprises a first mandrel 1, a second mandrel 2, a clutch sleeve 3, a driving stick 4, a clutch ring 5, a cushioning springs 6 and a safety springs 7.

The first mandrel 1 further comprises an engagement gear surface 10 formed on the section close to the second mandrel 2 for the engagement with the clutch sleeve 3 mounted on the second mandrel 2. The clutch sleeve 3 is driven by the driving stick 4 to shift longitudinally. The clutch ring 5 is slidably mounted on the clutch sleeve 3, having a cushioning mechanism with the clutch sleeve 3. The safety springs 7 (at least one piece) and the cushioning springs 6 (at least one piece) are included in the cushioning mechanism for slowing down the engagement between the clutch ring 5 and the engagement gear surface 10 on the first mandrel 1 when the clutch sleeve 3 is driven by the driving stick 4 but they are not precisely aligned.

On the other hand, when the driving stick 4 on the clutch sleeve 3 is driven to restore the initial configuration wherein the clutch ring 5 will depart (disengage) from the engagement gear surface 10 on the first mandrel 1, the safety springs 7 will pull backward to assist the backward movement of the clutch ring 5, if the clutch ring 5 has a problem going back.

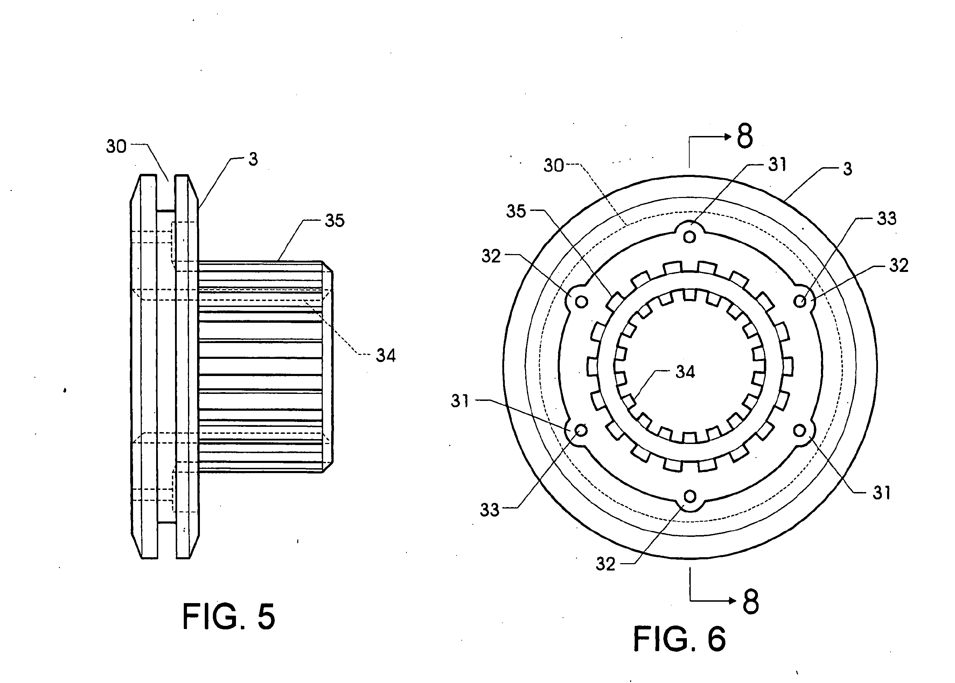

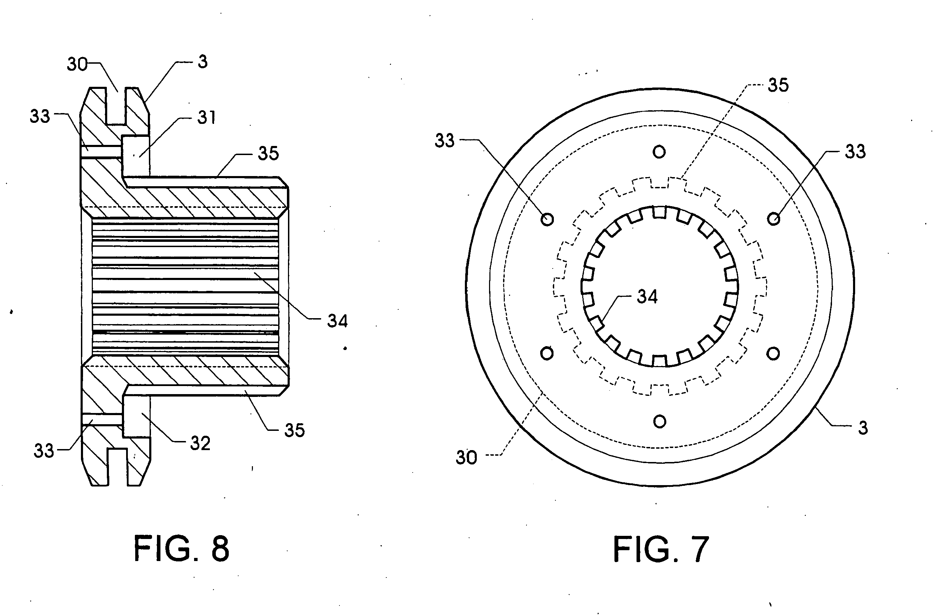

Referring to Figs. 5 to 8, the clutch sleeve 3 is provided with a ring groove 30 for retaining the driving stick 4 and a plurality of retaining rings 31 for fixing the cushioning springs 6. In this preferred embodiment, there are three such retaining rings for the cushioning springs 6; but the number is flexible. There are further same number of retaining rings 32 as the safety springs 7 in the clutch sleeve 3. The retaining rings 31 and 32 are respectively provided with through holes 33 for housing the positioning axles 60 and 70 for the cushioning springs 6 and the safety springs 7. The inner wall of the clutch sleeve 3 is provided with gear strips 34 for the engagement with the engagement grooves 20 on the second mandrel 2.

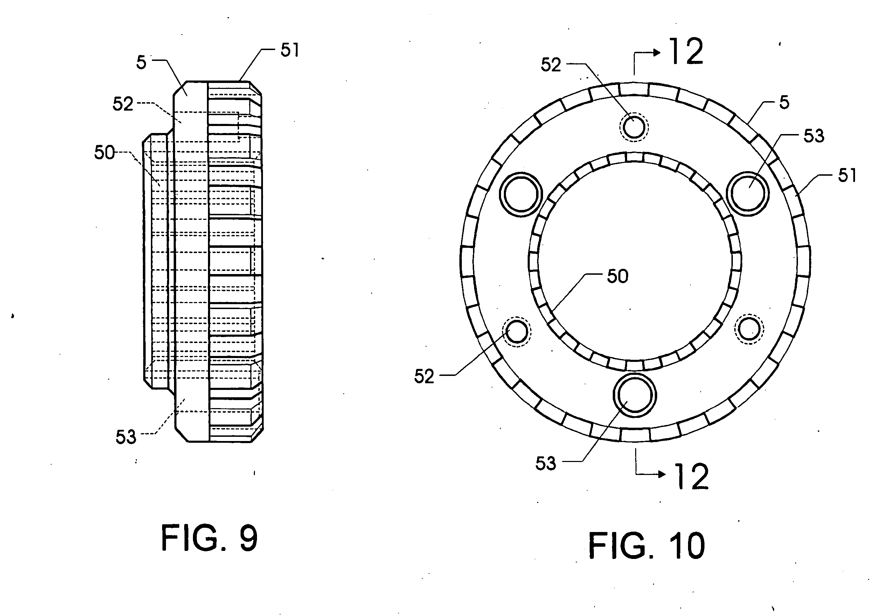

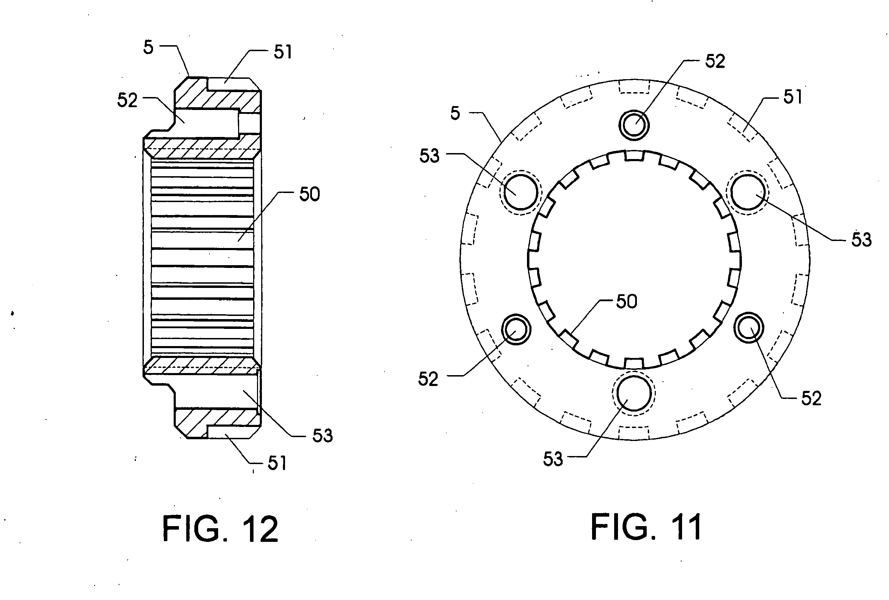

Referring to Figs. 9 to 11, the clutch ring 5 of the present invention is further provided with gear strips 50 on the inner wall thereof engaged with engagement slots 35 on the outer wall of the clutch sleeve 3. The outer wall of the clutch ring 5 is provided with an engagement gear surface 51 for engaging the engagement gear surface 10 on the first mandrel 1. The clutch ring 5 is further provided with same number of retaining holes 52 as the cushioning springs 6 and same number of retaining holes 53 as the safety springs 7. In this preferred embodiment, there are three such holes for the cushioning and for the safety springs 6, 7; but the number is flexible. Further, each of the retaining holes has a coaxial double-diameter inner space for securing a positioning axle 60 therein and at the same time encircling a spring around the axle.

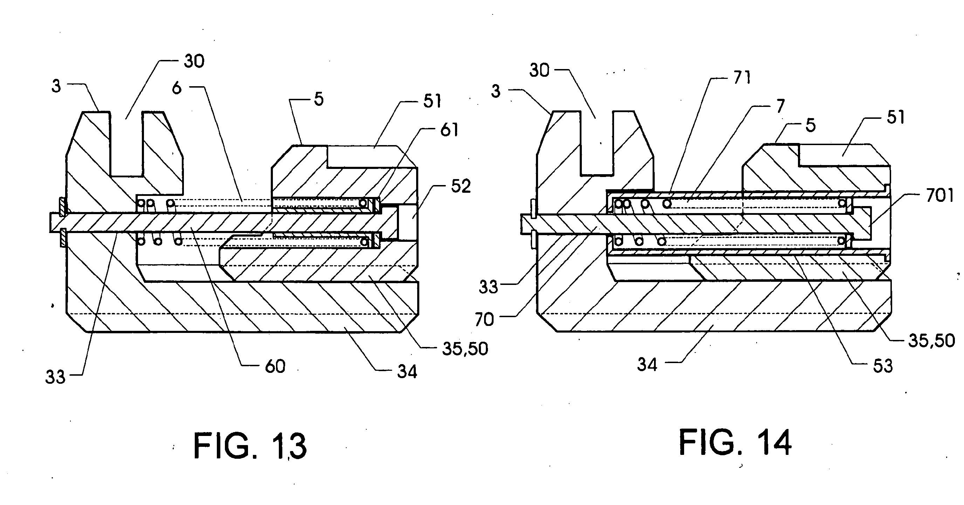

Referring to Fig. 13, a preferred embodiment has the cushioning springs 6 disposed between the clutch sleeve 3 and the clutch ring 5, wherein each of the cushioning springs 6 is confined by a corresponding one of the positioning axles 60. One end of each of the cushioning springs 6 is supported against the clutch sleeve 3, and the other end is supported against the retaining holes 52 of the clutch ring 5 with a gasket 61. Thereby, when the clutch sleeve 3 is moving forward whereas the clutch ring 5 is not, the cushioning springs 6 will automatically urge the clutch ring 5 forward while coupled with the clutch sleeve 3.

Referring to Fig. 14, a preferred embodiment has the safety springs 7 and the associated positioning axle 70 disposed between the clutch sleeve 3 and the clutch ring 5. One end of each of the positioning axle 70 is fixed on the clutch sleeve 3. Each of the safety springs 7 is encircled around a corresponding positioning axle 70, on which a cylindrical housing 71 is covered. When the clutch sleeve 3 is moving forward whereas the clutch ring 5 is not, the cushioning springs 6 will automatically urge the clutch ring 5 forward to be coupled with the clutch sleeve 3. One end of each of the safety springs 7 is supported against the inner wall on one end of a corresponding cylindrical housing 71, and the other end is supported against the terminal flange 701 of a corresponding cylindrical housing 71. The cylindrical housings 71 are mounted in the retaining holes 53 of the clutch ring 5, so that the safety springs 7 will be compressed in the cylindrical housings 71 when the clutch sleeve 3 is moving backward whereas the clutch ring 5 is not. The safety springs 7 will automatically urge the clutch ring 5 backward while coupled with the clutch sleeve 3.

Thereby, the present invention has the following advantages of:
1. structural simplicity for lowering the cost;
2. small size and being easy to assemble;
3. having a cushioning mechanism that prevents damages to transmission components when gear wheels cannot be engaged or separated; and
4. assuring safe operations of the components, therefore being more durable.

The present invention is thus described, and it will be obvious that the same may be varied in many ways.

## Claims

1. A clutch capable of cushioning forward movement and guarding backward movement, comprising:
a first mandrel (1) further comprising an engagement gear surface (10) on one end thereof;
a second mandrel (2);
a clutch sleeve (3) mounted on an end section of said second mandrel close to said first mandrel for engaging said engagement gear surface on said first mandrel;
a driving stick (4) driving said clutch sleeve to move longitudinally;
a clutch ring (5) slidably mounted on said clutch sleeve, having a cushioning mechanism with said clutch sleeve; and
a cushioning spring (6) disposed in said cushioning mechanism;
**characterised in that**
said cushioning spring is arranged to facilitate the engagement between said clutch ring and said engagement gear surface on said first mandrel due to a driving stick shift when said clutch ring and said engagement surface are not precisely aligned;
a safety spring (7) is disposed in said cushioning mechanism for facilitating the disengagement between said clutch ring (5) and said engagement gear surface (10) on said first mandrel due to a driving stick shift requiring such disengagement;
said clutch sleeve is further provided with a ring groove (30) for securing said driving stick and a retaining hole for said cushioning springs and a retaining hole for said safety spring;
each of said retaining holes comprising a through hole (33) for positioning axles (60, 70) for said cushioning spring and said safety spring; a plurality of engagement strips (34) being formed on an inner wall of said clutch sleeve for engaging a plurality of engagement slots (20) on said second mandrel; and said clutch sleeve further having a plurality of engagement slots (35) on an outer wall thereof for engaging said clutch ring.

2. A clutch according to Claim 1 wherein a plurality of engagement strips (50) are formed on an inner wall of said clutch ring for engaging said outer wall of said clutch sleeve; said clutch ring further having an engagement gear surface (51) on an outer wall of said clutch ring for engaging said engagement gear surface (10) on said first mandrel; said clutch ring being further provided with retaining holes (52) for said cushioning springs and retaining holes (53) for said safety spring; said retaining holes having a coaxial double-diameter inner space.

3. A clutch according to Claim 1 wherein each of said positioning axles of cushioning springs has one end fixed on said clutch sleeve, whereby said one end of said cushioning spring supports against said clutch sleeve and a second end supports against a corresponding retaining hole (52) on said clutch ring.

4. A clutch according to Claim 1 wherein said positioning axle of said safety spring has one end fixed on said clutch sleeve; a cylindrical sleeve (71) covering said safety spring; one end of said safety spring supporting against an inner wall of said cylindrical sleeve and a second end thereof supporting against a terminal flange (701) of said positioning axle.

5. A clutch according to Claim 1 wherein said cushioning spring is in compressed state when said clutch sleeve is moving forward whereas said clutch ring is not, and whereby said safety spring will automatically urge said clutch ring forward so as to engage said engagement gear surface.

6. A clutch according to claim 1 wherein said safety spring is in compressed state when said clutch sleeve is moving backward whereas said clutch ring is not, and whereby said safety spring will automatically urge said clutch ring backward so as to disengage from engagement gear surface.

## Patentansprüche

1. Kupplung, die in der Lage ist, die Vorwärtsbewegung abzufedern und die Rückwärtsbewegung zu sichern, umfassend:
einen ersten Dorn (1), der ferner eine Eingriffsfläche (10) an seinem einem Ende umfasst;
einen zweiten Dorn (2);
eine Kupplungshülse (3), die in der Nähe des ersten Dorns auf einem Endabschnitt des zweiten Dorns montiert ist, um mit der Eingriffsfläche auf dem ersten Dorn in Eingriff zu kommen;
einen Schalthebel (4), der die Kupplungshülse zu einer Bewegung in Längsrichtung antreibt;
einen Kupplungsring (5), der verschiebbar auf der Kupplungshülse montiert ist und eine Federungsvorrichtung gegenüber der Kupplungshülse aufweist; und
eine Pufferfeder (6), die in der Federungsvorrichtung angeordnet ist, **dadurch gekennzeichnet, dass**
die Pufferfeder dafür eingerichtet ist, das Ineinandergreifen des Kupplungsrings mit der Eingriffsfläche auf dem ersten Dorn - aufgrund einer Verlagerung des Schalthebels - zu ermöglichen, wenn der Kupplungsring und die Eingriffsfläche nicht genau miteinander fluchten;
eine Sicherheitsfeder (7) in der Federungsvorrichtung angeordnet ist, um die Trennung des Kupplungsrings (5) von der Eingriffsfläche (10) auf dem ersten Dorn - aufgrund einer Verlagerung des Schalthebels, die eine derartige Trennung erforderlich macht - zu erleichtern, wobei
die Kupplungshülse ferner mit einer Ringnut (30) versehen ist, um den Schalthebel zu sichern, und mit einer Halteöffnung für die Pufferfedern und einer Halteöffnung für die Sicherheitsfeder versehen ist;
wobei jede der Halteöffnungen ein Durchgangsloch (33) für die Positionierungsachsen (60, 70) der Pufferfedern und die Sicherheitsfeder aufweist, und wobei eine Vielzahl von Eingriffleisten (34) auf der Innenwand der Kupplungshülse ausgebildet ist, um in eine Vielzahl von Eingriffschlitzen (20) an dem zweiten Dorn einzugreifen, wobei die Kupplungshülse an ihrer Außenwand ferner eine Vielzahl von Eingriffschlitzen (35) für das Ineinandergreifen mit dem Kupplungsring aufweist.

2. Kupplung nach Anspruch 1, wobei eine Vielzahl Eingriffstreifen (50) auf der Innenwand des Kupplungsrings ausgebildet ist, um mit der Außenwand der Kupplungshülse in Eingriff zu kommen, wobei der Kupplungsring ferner eine Eingriffsfläche (51) auf der Außenwand des Kupplungsrings aufweist, um mit der Eingriffsfläche (10) auf dem ersten Dorn ineinanderzugreifen, wobei der Kupplungsring ferner mit Halteöffnungen (52) für die Pufferfedern und Halteöffnungen (53) für die Sicherheitsfoder versehen ist, und wobei die Halteöffnungen einen Innenraum mit koaxialem doppelten Durchmesser aufweisen.

3. Kupplung nach Anspruch 1, wobei jede der Positionierungsachsen der Pufferfedern ein an der Kupplungshülse befestigtes Ende aufweist, wobei dieses Ende der Pufferfeder sich gegen die Kupplungshülse abstützt und das zweite Ende sich gegen eine entsprechende Halteöffnung (52) im Kupplungsring abstützt.

4. Kupplung nach Anspruch 1, wobei die Positionierungsachse der Sicherheitsfeder ein an der Kupplungshülse befestigtes Ende aufweist und eine zylinderförmige Hülse (71) die Sicherheitsfeder bedeckt, wobei ein Ende der Sicherheitsfeder sich gegen die Innenwand der zylinderförmigen Hülse abstützt und ein zweites Ende sich gegen einen Endflansch (701) der Positiorzierungsachss abstützt.

5. Kupplung nach Anspruch 1, wobei die Pufferfeder sich im zusammengedrückten Zustand befindet, wenn sich die Kupplungshülse vorwärts bewegt und der Kupplungsring nicht, und wobei die Sicherheitsfeder automatisch den Kupplungsring nach vorn drückt, um ihn mit der Eingriffsfläche in Eingriff zu ringen.

6. Kupplung nach Anspruch 1, wobei die Sicherheitsfeder sich im zusammengedrückten Zustand befindet, wenn sich die Kupplungshülse rückwärts bewegt und der Kupplungsring nicht, und wobei die Sicherheitsfeder automatisch den Kupplungsring nach hinten drückt, um ihn von der Eingriffsfläche zu trennen.

## Revendications

1. Embrayage apte à amortir un mouvement avant et à garantir un mouvement arrière, comprenant :
un premier mandrin (1) qui présente lui-même sur une extrémité une surface d'accouplement (10) ;
un second mandrin (2) ;
un manchon d'embrayage (3) qui est monté sur une partie d'extrémité du second mandrin, près du premier mandrin, pour accoupler la surface d'accouplement prévue sur le premier mandrin ;
une tige de commande (4) qui commande le manchon d'embrayage pour déplacer celui-ci longitudinalement ;
une bague d'embrayage (5) qui est montée coulissante sur le manchon d'embrayage et qui a un mécanisme d'amortissement avec celui-ci ; et
un ressort d'amortissement (6) qui est disposé dans le mécanisme d'amortissement :
**caractérisé en ce que** le ressort d'amortissement est conçu pour faciliter l'accouplement entre la bague d'embrayage et la surface d'accouplement du premier mandrin, dû à un déplacement de la tige de commande, quand la bague d'embrayage et ladite surface d'accouplement ne sont pas alignées avec précision ;
**en ce qu'**un ressort de sûreté (7) est disposé dans le mécanisme d'amortissement pour faciliter le désaccouplement entre la bague d'embrayage (5) et la surface d'accouplement (10) du premier mandrin, dû à un déplacement de la tige de commande nécessitant ce désaccouplement ;
**en ce que** le manchon d'embrayage est également pourvu d'une rainure annulaire (30) destinée à immobiliser la tige de commande, d'un trou de retenue pour les ressorts d'amortissement et d'un trou de retenue pour le ressort de sûreté ;
chacun des trous de retenue comprenant un trou traversant (33) pour des axes de positionnement (60, 70) pour le ressort d'amortissement et le ressort de sûreté ; plusieurs nervures d'accouplement (34) étant formées sur une paroi intérieure du manchon d'embrayage pour s'accoupler avec plusieurs fentes d'accouplement (20) prévues sur le second mandrin ; et le manchon d'embrayage ayant par ailleurs, sur une paroi extérieure, plusieurs fentes d'accouplement (35) pour s'accoupler avec la bague d'embrayage.

2. Embrayage selon la revendication 1, dans lequel plusieurs nervures d'accouplement (50) sont formées sur une paroi intérieure de la bague d'embrayage, pour s'accoupler avec la paroi extérieure du manchon d'embrayage ; ladite bague d'embrayage ayant par ailleurs, sur une surface extérieure, une surface d'accouplement (51) destinée à s'accoupler avec la surface d'accouplement (10) prévue sur le premier mandrin ; la bague d'embrayage étant par ailleurs pourvue de trous de retenue (52) pour les ressorts d'amortissement, et de trous de retenue (53) pour le ressort de sûreté ; les trous de retenue ayant un espace intérieur coaxial à double diamètre.

3. Embrayage selon la revendication 1, dans lequel chacun des axes de positionnement des ressorts d'amortissement a une extrémité fixée sur le manchon d'embrayage, ladite extrémité du ressort d'amortissement étant en appui contre le manchon d'embrayage tandis qu'une seconde extrémité est en appui contre un trou de retenue correspondant (52) de la bague d'embrayage.

4. Embrayage selon la revendication 1, dans lequel l'axe de positionnement du ressort de sûreté a une extrémité fixée sur le manchon d'embrayage ; un manchon cylindrique (71) couvrant le ressort de sûreté ; une extrémité du ressort de sûreté étant en appui contre une paroi intérieure du manchon cylindrique tandis qu'une seconde extrémité est en appui contre une collerette d'extrémité (701) de l'axe de positionnement.

5. Embrayage selon la revendication 1, dans lequel le ressort d'amortissement est à l'état comprimé quand le manchon d'embrayage se déplace vers l'avant et pas la bague d'embrayage, moyennant quoi le ressort de sûreté poussera automatiquement la bague d'embrayage vers l'avant pour qu'elle s'accouple avec la surface d'accouplement.

6. Embrayage selon la revendication 1, dans lequel le ressort de sûreté est à l'état comprimé quand le manchon d'embrayage se déplace vers l'arrière et pas la bague d'embrayage, moyennant quoi le ressort de sûreté poussera automatiquement la bague d'embrayage vers l'arrière pour qu'elle soit désaccouplée de la surface d'accouplement.
